# EUROPEAN PATENT APPLICATION

(11) **EP 0 831 331 A1**
(43) Date of publication of application: **25.03.1998**
(21) Application number: 97112012.6
(22) Date of filing: 15.07.1997
(51) Int. Cl.: G01P 3/44

(54) **A tapered bearing unit with a rotational speed gauging device intermediate two sets of rollers**

(30) Priority: 18.09.1996 IT TO960757
(71) Applicant: SKF INDUSTRIE S.p.A., I-10123 Torino (IT)
(72) Inventor: de Ponte, Aniello, 10135 Torino (TO) (IT); Genero, Matteo, 10026 Santena (TO) (IT); Moretti, Roberto, 10020 Cambiano (TO) (IT)
(74) Representative: Di Francesco, Gianni

(57) **Abstract**

A tapered bearing unit comprises a non-rotating outer race (11), a pair of inner, rotating half-races (12a, 12b), and two sets of rollers (15a, 15b). The bearing unit (10) is equipped with a device (17, 19) for measuring relative rotational speed between the rotating and the non-rotating races. The measuring device comprises an impulse generating ring (17) integral with a rotating part and facing a sensor (19) mounted to a non-rotating part. The measuring device (17, 19) is mounted in an axially intermediate position between the two sets of rollers (15a, 15b).

## Description

The present invention relates to railway axle bearing units of the type comprising a double set of tapered or cylindrical roller bodies.

It is presently known to fit revolving speed measuring devices to the axially outer side of railway axle bearing assemblies. These devices, as well known in the art, comprise an impulse generator integral with one of the rotating parts and facing a sensor device mounted to a no-rotating element. The axial bulk is increased with those solutions where the measuring devices are mounted on the outside of the bearing assembly.

One of the problems to be solved in these applications concerns the little space available for fitting these devices. In several applications, particularly those where a bearing is mounted in a bush and the so formed unit is fitted in the railway wheel, there are physical limits that do not allow to mount components that constitute an extension in the axial direction.

It is an object of the present invention to provide a railway axle bearing assembly fitted with a device for measuring the revolving speed of the rotating bearing races without increasing the axial bulk or causing an extension in the axial direction.

It is another object of the present invention to fit the measurement device at a location where it is protected from polluting agents such as water, dust, mud.

An inconvenience with railway axle bearing assemblies is that the stationary race of the bearing tends to rotate to some extent with respect to the seat in which it is accommodated, as a minimum clearance is provided between the bearing and its seat to fit the bearing in place. Such a seat is normally provided in a supporting bush of cast iron, which is likely to yield with time, becoming larger, especially with bearings of underground railway vehicles which are subjected to almost continuous acceleration and deceleration forces between near underground stations. Owing to these forces, accompanied by inevitable vibrations, the bearing gradually increases its clearance within the seat, whereby the bush wears and is likely to be damaged over time.

It is therefore a further object of the present invention to obviate this drawback by providing a bearing assembly capable of impeding the above discussed movement of the outer, stationary bearing race relative to its seat.

Toward the attainment of these and additional objects and advantages, the present invention provides a tapered bearing unit comprising at least a non-rotating outer race, a pair of inner, rotating half-races, and two sets of rollers, each set being interposed between said outer race and one of the two inner, rotating half-races; the bearing unit being equipped with a device for gauging relative rotational speed between said rotating and non-rotating races, said gauging device comprising an impulse generating ring integral with a rotating part and facing a sensor mounted to a non-rotating part; characterised in that said gauging device is mounted in an axially intermediate position between said sets of rollers.

In order that the present invention may be well understood there will now be described a preferred embodiment thereof, given by way of example, reference being made to the accompanying drawings, in which:
- FIG. 1: is an axial cross sectional view of a bearing unit in accordance with the present invention;
- FIG. 2: shows a detail of FIG. 1 to an enlarged scale; and
- FIG. 3: is a transverse cross sectional view of the bearing unit of FIG. 1.

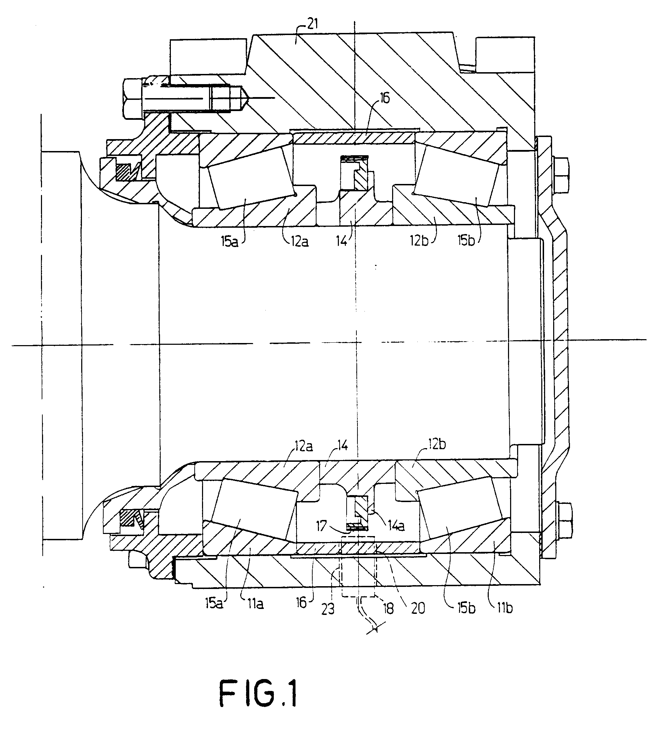

With reference initially to FIG. 1, a railway axle bearing unit is designated overall at 10. The bearing unit 10 is housed in a cylindrical support bushing 21 and is composed of a non rotating outer race 11, a pair of inner rotating half-races 12a, 12b, axially separated by an inner annular spacer 14, and two sets of rollers 15a, 15b. Each set of rollers is radially interposed between the outer race 11 and a corresponding one of the two inner, rotating half-races 12a, 12b.

The present invention proposes to exploit the space existing between the sets of rollers to locate there a device for measuring relative rotational speed between the rotating and the non rotating races of the bearing unit. In the text below, such a speed measuring device will be described only to such an extent as is necessary for the understanding of the invention.

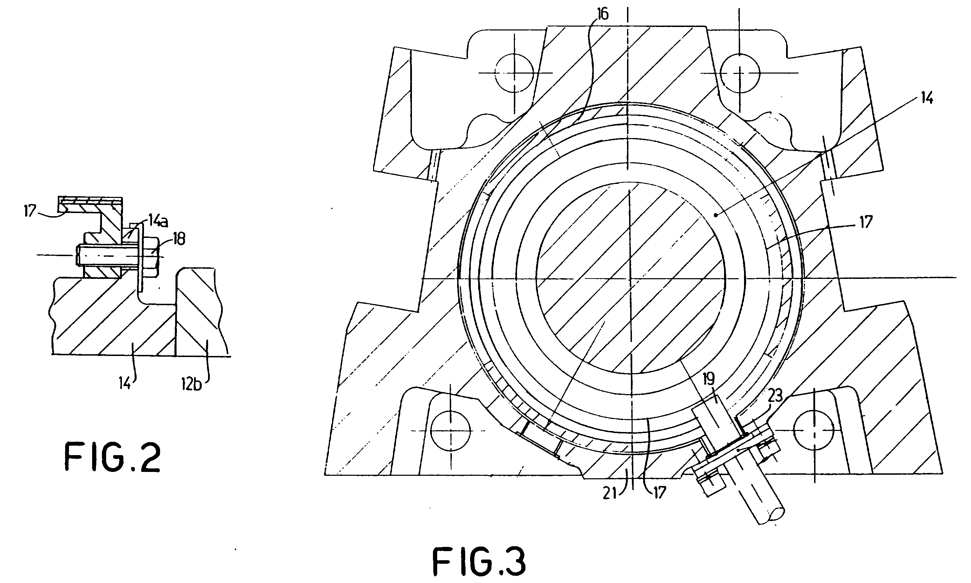

Still referring to FIG. 1, the spacer ring 14 is integral with coding wheel or impulse ring 17 disposed on the radially outer part of the spacer ring 14. The impulse ring 17 may indifferently be formed integrally with the spacer ring 14 by machining or be a separately manufactured element fixed to the spacer ring in a second time to rotate fast therewith. In the detail of FIG. 2 there is shown an example in which the impulse ring 17 is a distinct element fixed to a flange portion 14a of the spacer ring 14 by means of screws 18.

With reference to FIG. 3, a sensor 19 is facing the impulse ring 17 and is radially inserted in one of the lubricating apertures 20 that are normally provided in the bearing outer race 11, in case this is a single body. In case the outer rolling races are composed of two separate half-races 11a, 11b between which there is fitted an outer annular spacer 16, the lubricating apertures are obtained in the latter. Preferably, the apertures 20 are elongated in the circumferential direction so as to facilitate the insertion of the sensor 19. As shown in FIG. 3, the sensor 19 is inserted through another aperture 23 in supporting bush 21 and the aperture 20 in the outer bearing race 11 (or in the spacer element, where provided). The sensor constitutes a fixed stopping means contrasting rotation of the bearing within the bushing that accommodates it.

While a specific embodiment of the invention has been disclosed, it is to be understood that such disclosure has been merely for the purpose of illustration and that the invention is not to be limited in any manner thereby. Various modifications will be apparent to those skilled in the art in view of the foregoing example. Particularly, the impulse ring may be of the type consisting of a metal toothed ring or a ring with angularly equally spaced magnetised sectors. The sensor will clearly have to be chosen of a kind compatible with the impulse ring fitted.

## Claims

1. A tapered bearing unit comprising at least a non-rotating outer race (11), a pair of inner, rotating half-races (12a, 12b), and two sets of rollers (15a, 15b), each set being interposed between said outer race (11) and one of the two inner, rotating half-races (12a, 12b); the bearing unit (10) being equipped with a device (17, 19) for gauging relative rotational speed between said rotating and non-rotating races, said gauging device comprising an impulse generating ring (17) integral with a rotating part and facing a sensor (19) mounted to a non-rotating part; characterised in that said gauging device (17, 19) is mounted in an axially intermediate position between said sets of rollers (15a, 15b).

2. A bearing unit as claimed in claim 1, comprising an annular inner spacer (14) axially interposed between said inner half races (12a, 12b), characterised in that said impulse generating ring (17) is integral with said inner annular spacer (14).

3. A bearing unit as claimed in claim 2, characterised in that said impulse generating ring (17) is a metal toothed ring integrally formed with said inner annular spacer (14).

4. A bearing unit as claimed in claim 1, characterised in that said impulse generating ring (17) is a separate member fixed to said inner annular spacer to rotate fast therewith.

5. A bearing unit as claimed in claim 1, characterised in that said sensor (19) is inserted in an aperture (20) formed in said outer race (11) or between the two outer races at a location intermediate the two sets of rollers.

6. A bearing unit as claimed in claim 1, wherein the outer bearing race is composed of two distinct half-races separated by an outer spacer ring (16), characterised in that the sensor (19) is inserted in an aperture (20) formed in said outer spacer ring (16) at a location intermediate the two sets of rollers.

7. A bearing unit as claimed in claim 5 or 6, characterised in that the sensor (19) is radially inserted through said aperture (20) and another corresponding aperture (23) formed in a bearing supporting bush (21), such that the sensor (19) provides a means for stopping relative rotation between the bearing (10) and the bushing (21).

8. A bearing unit as claimed in claim 2, characterised in that said impulse ring (17) is disposed on the radially outer part of the inner spacer ring (14).
